# FASCICULE DE BREVET EUROPEEN

(11) **EP 1 800 377 B1**
(45) Date de publication et mention de la délivrance du brevet: **16.09.2015**
(21) Numéro de dépôt: 05800626.3
(22) Date de dépôt: 28.09.2005
(51) Int. Cl.: H02G 5/06

(54) **DISQUE ISOLANT DE SUPPORT D'UN CONDUCTEUR ET ENSEMBLE ELECTRIQUE COMPRENANT CE DISQUE**
ISOLIERSCHEIBE FÜR ELEKTRISCHEN LEITER UND ELEKTRISCHE BAUGRUPPE MIT EINER SOLCHEN ISOLIERSCHEIBE
CONDUCTOR SUPPORT INSULATING DISC AND ELECTRICAL ASSEMBLY COMPRISING SAME

(30) Priorité: 04.10.2004 FR 0452245
(43) Date de publication de la demande: 27.06.2007
(73) Titulaire: ALSTOM Technology Ltd, 5400 Baden (CH)
(72) Inventeur: HILTBRUNNER, Hugo, CH-2824 VICQUES (CH); PALMIERI, Gerardo, CH-5036 OBERENTFELDEN (CH); POHLINK, Karsten, CH-5035 UNTERENTFELDEN (CH); TSCHANNEN, Christian, CH-5035 UNTERENTFELDEN (CH); BESSEDE, Jean-Luc, F-38300 CHATEAUVILLAIN (FR); KIEFFEL, Yannick, F-38290 FRONTONAS (FR)
(74) Mandataire: Ahner, Philippe
(86) Numéro de dépôt international: PCT/FR2005/050789
(87) Numéro de publication internationale: WO 2006/037914

(56) Documents cités:
- EP-A- 0 588 359
- EP-A- 1 039 609
- DE-A1- 2 157 388
- DE-A1- 3 906 553
- DE-A1- 4 007 335
- US-A- 3 906 149
- US-A- 3 949 157
- US-A- 4 688 142
- [en ligne] Extrait de l'Internet: <URL:http://www.experta.fr/produits/polyeth ilenes-terephtalate/petp> [extrait le 2013-02-07]
- EXPERTA: Fiche technique produit "Polyester PETP"
- EXPERTA: Fiche technique produit "Polyester PETG"

## Description

Un aspect de l'invention est un disque isolant servant à soutenir un conducteur électrique pour de l'appareillage électrique à moyenne ou haute tension, et un autre aspect est un ensemble électrique comprenant ce disque.

On connaît divers appareillages électriques à haute ou moyenne tension, comme des câbles ou des sectionneurs, où un conducteur porté à un certain potentiel doit être soutenu par une autre portion de l'appareillage, telle qu'une enceinte, portée à un autre potentiel électrique par l'entremise d'un élément isolant. De nombreuses formes et de nombreuses matières ont été proposées pour construire ce dernier. Les solutions connues présentent cependant des insuffisances et des inconvénients. Certaines matières ne peuvent pas être usinées, ce qui oblige à fabriquer les supports isolants par une technique coûteuse telle que le moulage ; certains isolants proposés dans l'art antérieur ont des formes complexes qui rendent encore leur fabrication onéreuse et compliquent leur montage ; enfin, toutes les matières ne sont pas étanches aux gaz, ce qui interdit de les employer quand l'isolant doit aussi séparer deux compartiments différents.

Les exigences constantes d'isolation électrique rencontrées dans ce domaine et de résistance mécanique sont aggravées pour des appareillages tels des sectionneurs où les sollicitations électriques dues aux connexions et aux déconnexions successives sont plus importantes et qui travaillent à des températures élevées, de l'ordre de 80°C ; et surtout dans certaines atmosphères particulières comme l'hexafluorure de soufre SF₆, que les arcs électriques produits dans de tels appareils décomposent pour donner des produits corrosifs, dont l'acide fluorhydrique entre autres qui attaque certains isolants. De tels équipements sont souvent appelés GIS (Gas Insulated Switchgear), ou sous-stations étanches aux gaz, dans le domaine technique.

Toutes ces exigences sont très difficiles à concilier. L'art antérieur des isolants considérés ici comprend ainsi des disques hétérogènes composés d'une structure feuilletée de divers matériaux en couches concentriques, qui assure certaines propriétés électriques, mais qui n'est pas étanche aux gaz et demande une fabrication compliquée et coûteuse. Les exigences de résistance mécanique et de résistance à la corrosion ne sont pas toujours respectées non plus.

Les documents EP 0 588 359 A et DE 39 06 553 A décrivent des disques en résine époxyde ou en silicone. Ces matières gardent une bonne résistance mécanique à température élevée et sous une atmosphère corrosive mais leur fabrication nécessaire par le moulage est aussi coûteuse et s'accompagne de défauts superficiels qui favorisent l'apparition d'arcs électriques. Les disques doivent donc être recouverts d'une couche qui parfait l'isolation ou d'écrans qui jouent le même rôle, ce qui renchérit encore plus la fabrication, sans qu'ils soient nécessairement résistants à la corrosion.

Des polymères thermoplastiques ont encore été proposés pour construire les isolants : le document EP 1 039 609 A décrit ainsi un disque isolant en polyéthylène ou polypropylène massif, mais qui est conçu pour des câbles dépourvus d'appareillage de commutation où la corrosion par les produits de décomposition du SF₆ n'apparaît pas en l'absence d'arcs de commutation et où les températures moins élevées que dans les sectionneurs et les appareillages actifs analogues ne réduisent pas autant la rigidité mécanique de l'isolant.

DE 21 52 388 A décrit un disque isolant épais et de forme irrégulière fabriqué par enroulement d'une bande autour du conducteur. La bande peut être en polyéthylène téréphtalate de constante diélectrique égale à 3,2.

L'invention concerne un dispositif isolant du genre précité, en forme de disque, et monté sur une pièce telle qu'une enceinte tout en servant de support à un conducteur électrique porté à un autre potentiel que l'enceinte, et qui est caractérisé en ce qu'il est construit en usinant un bloc de polyester thermoplastique en polyéthylène téréphtalate semi-cristallin, ayant un taux de cristallinité compris entre 25 % et 50 %. Sa constante diélectrique relative est inférieure à 4,0. Cette matière ne semble avoir jamais été employée pour les isolants dont il est question ici. Elle possède toutes les caractéristiques qui faisaient défaut aux matières employées dans l'art antérieur : elle se laisse facilement usiner à partir de plaque épaisse ou bien façonner économiquement par extrusion plutôt que par moulage, possède une constante diélectrique relativement faible, permet des assemblages étanches aux gaz, et résiste aux attaques par les gaz usuellement employés dans des enceintes des sectionneurs. Sa structure est régulière, exempte de vides et d'inclusions, ce qui la rend fiable en éliminant les décharges partielles et cheminements de surface souvent induits par les défauts de moulage dans le cas de certaines résines époxydes. Le disque peut donc être placé sans précaution particulière sur l'ouverture d'une enceinte et sans affecter le fonctionnement de l'appareillage en perturbant le champ électrique. Il peut être façonné sans difficulté à partir de plaque épaisse avec des outils d'usinage conventionnels et recevoir des aménagements particuliers destinés à son montage ou à la connexion des conducteurs qu'il porte, par exemple.

Les polyesters sont connus depuis des dizaines d'années. Leur négligence dans cette application pourrait être expliquée par la perte de rigidité des polymères thermoplastiques et l'excès de dilatation thermique quand ils sont chauffés, et par leur sensibilité possible aux attaques de l'acide fluorhydrique. Or il est apparu que les polyesters restaient intacts sous la corrosion chimique rencontrée en pratique, que leurs dilatations thermiques étaient acceptables et qu'ils gardaient une résistance mécanique convenable même à 80°C environ : pour un polyester envisagé pour l'invention, on constate que la résistance à la rupture, de 85 MPa à 20°C, est encore de 45 MPa à 80°C et que le module d'élasticité de 3200 MPa à 20°C est divisé par deux à 80°C, au-delà de la température de transition vitreuse de cette matière à 75°C. *Il est à noter que le polyéthylène* et *polypropylène présentent des caractéristiques mécaniques insuffisantes au regard de l'application. Notamment, le module d'élasticité du polyéthylène est de l'ordre* de 750 *MPa à 20°C* et de *1000 MPa pour le polypropylène occasionnant des épaisseurs non acceptables pour l'appareillage électrique. De plus, ces matériaux présentent des coefficients de dilatation linéaire* de *l'ordre* de *deux fois supérieurs au polyester ce qui rend difficile leur utilisation dans des applications étanches.*

Enfin, la résistivité superficielle, la constante diélectrique ainsi que rigidité électrique d'un disque en polyester n'ont pas été altérés par un essai vieillissement de 1000h dans une atmosphère chargée à 0,1% (vol.) en acide fluorhydrique gazeux sous une pression de 3,5 bars.

Plusieurs genres de polyesters thermoplastiques existent. On choisira, de préférence, ceux dont la constante diélectrique relative est inférieure à 4,0 (à la fréquence considérée du courant, 50 Hz par exemple). Les polyesters thermoplastiques préférés sont les polyesters thermoplastiques semi-cristallins. Ce matériau peut être renforcé par une charge minérale, préférentiellement choisie parmi les matériaux suivants : silice, alumine, billes de verre, fibres de verre, mica, talc, nanocharges de type silicate pour l'utilisation au-delà de la transition vitreuse. Un polyester qui s'est révélé particulièrement favorable sous tous égards est le polyéthylène téréphtalate ou PET-P dont la structure chimique est (C₈O₄H₈)ₙ. Un taux de cristallinité compris dans une plage de 25% à 60 % (une plage de 25% à 50% est revendiquée dans l'invention), une température de transition vitreuse comprise dans une plage de 70°C à 100°C et une température de fusion de la phase cristalline comprise dans la plage 230°C à 270°C sont des propriétés qui ont éte trouvées parmi les PET-P les meilleurs pour l'application. Le matériau est utilisé sans lubrifiant. Les équipements électriques travaillent souvent à des températures élevées. Il faut prendre des précautions contre les conséquences de l'expansion thermique relativement importantes des polymères, notamment à l'égard de l'étanchéité. Dans une réalisation particulière de l'invention, le disque comprend des perçages périphériques dans lesquels sont engagés en force des tubes métalliques saillant du disque en ayant une longueur supérieure à une épaisseur du disque d'au moins 0,5 %. On verra comment cette disposition permet de maintenir l'étanchéité même à température élevée et variable. Le disque peut aussi être équipé d'un anneau métallique entourant le disque et saillant du disque en ayant une largeur supérieure à une épaisseur du disque d'au moins 0,5 %.

Un écran thermique peut aussi être ajouté à l'interface entre le conducteur électrique et le disque isolant afin de diminuer la température sur le polyester thermoplastique ou d'augmenter la température permise sur le conducteur. L'écran thermique autour du conducteur est formé d'un matériau stable à haute température et à faible conductivité thermique et peut être choisi parmi les céramiques, les résines thermodurcissables ou les thermoplastiques à haute température, des matériaux composites, selon la température du conducteur.

L'écran thermique a une forme tubulaire et la rugosité ou le dessin du côté extérieur de l'écran thermique peut être adapté pour augmenter l'adhérence entre l'écran thermique et le disque ou pour permettre un assemblage aisé par exemple par vissage, cannelure, liaison collée ou autre. Par exemple, l'écran thermique peut être griffé, ou l'écran thermique et le disque peuvent être assemblés par queues d'aronde. L'épaisseur d'anneau de l'écran thermique s'étend de 1 mm à 30 mm selon la température du conducteur et la nature du matériau d'écran thermique choisi, sa longueur est similaire à l'épaisseur du disque.

Dans le cas où le disque isolant est soumis à de fortes contraintes mécaniques, par exemple si le disque isolant est soumis à une forte différence de pression, la liaison entre le conducteur et le disque isolant peut être renforcée par l'utilisation d'un insert métallique pour faire une liaison solide entre le conducteur et l'isolant. L'insert métallique a une forme tubulaire et la rugosité ou le dessin du côté extérieur de l'insert peut être adapté pour augmenter l'adhérence entre l'insert et le disque ou pour permettre un assemblage aisé par exemple par vissage, cannelure, liaison collée ou autre. Par exemple, l'insert métallique peut être griffé, ou l'insert métallique et le disque peuvent être assemblés par queues d'aronde. L'épaisseur d'anneau de l'insert métallique s'étend de 1 mm à 30 mm selon la géométrie de la liaison choisie, sa longueur est similaire à l'épaisseur du disque.

Afin d'accroître la résistance du disque isolant aux produits de décomposition de gaz corrosifs tels que ceux générés à partir du gaz SF₆, un vernis convenable peut être appliqué à la surface du disque isolant ; on peut conseiller une couche d'environ 30 µm d'épaisseur de vernis de polyuréthane aliphatique. Un exemple en est le FARBA V50, qui peut être appliqué à la brosse ou au rouleau à peinture, ou diffusé sous pression, et mis à sécher pendant 4 heures.

L'ensemble électrique dont font partie les disques isolants et le conducteur comprend des électrodes du conducteur disposées à la surface du disque pour augmenter la tension d'ignition des décharges partielles. On préconise d'intercaler un dispositif entre les électrodes et le disque afin d'éloigner les électrodes et d'augmenter encore plus la tension d'ignition. Les électrodes sont supportées par un épaulement autour du conducteur.

Le disque peut comprendre au moins un perçage radial dans lequel est placé un conducteur essentiellement au potentiel de la pièce de support, ou de la terre. Ce conducteur peut être un conducteur de mise à la terre relié à elle directement ou par un instrument de mesure.

Les perçages, rainures, etc. que le disque reçoit sont redevables à la bonne usinabilité des polyesters.

Ces aspects de l'invention, ainsi que d'autres, seront maintenant décrits plus en détail au moyen des figures suivantes :
- la figure 1 représente une vue générale d'un sectionneur électrique comprenant deux disques sujets de l'invention ;
- les figures 2 et 3 sont des agrandissements de la figure 1 ;
- la figure 4 est une vue de face du disque ;
- et la figure 5 illustre une variante de réalisation du disque ;
- et la figure 6 est une variante de la figure 2.

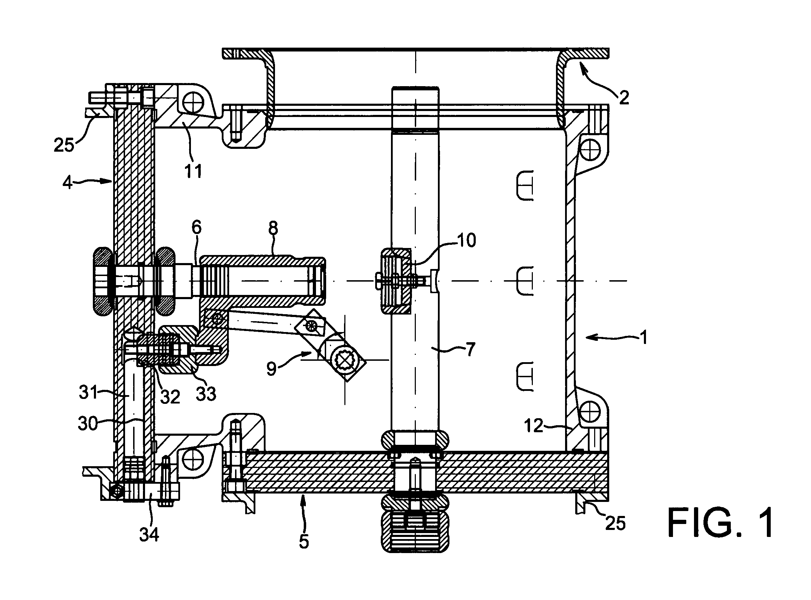

On décrit d'abord la figure 1, qui représente un sectionneur délimité principalement par une enceinte métallique 1 étanche aux gaz, qui est cependant munie d'ouvertures. Une ouverture supérieure est délimitée par une bride 2 à laquelle est boulonné (ce qui n'est pas dessiné dans la figure 1) soit un même sectionneur ou un autre appareil avec un disque 5 et un conducteur en contact avec le conducteur 7 par un manchon. Deux autres ouvertures sont obturées par des disques 4 et 5 conformes à l'invention et qui soutiennent respectivement des conducteurs 6 et 7. Les disques 4 et 5 sont usinés dans un bloc de polyéthylène téréphtalate, dont la constante diélectrique relative est de 4,0 au plus. Le rapport diamètre - sur-épaisseur des disques 4 et 5 est de préférence inférieur à 10. Les conducteurs 6 et 7 sont perpendiculaires entre eux et peuvent être connectés par une douille 8 d'un sectionneur, qui coulisse le long de l'extrémité de l'un d'entre eux 6 sous l'action d'un mécanisme d'actionnement 9 dont seule l'extrémité est représentée et qui comprend des leviers, des bielles, des ressorts, etc. ainsi qu'il est connu. Il permet d'avancer la douille 8 jusqu'à la faire pénétrer dans un réceptacle 10 associé au conducteur 7, établissant la connexion électrique - la douille restant enfilée partiellement sur le conducteur 6 - ou d'établir une position de séparation où la douille 8 est retirée du réceptacle 10 en l'enfonçant plus autour du conducteur 6. Le conducteur 6 peut alors être mis à la terre comme on le mentionnera plus loin. La description porte maintenant sur les disques 4 et 5, et en premier lieu sur le disque 4 qui présente les mêmes détails que le disque 5, mais aussi des détails particuliers.

Les disques 4 et 5 sont posés sur des faces planes des brides 11 et 12 de l'enceinte 1 et permettent de clore les ouvertures délimitées par ces brides. Les conducteurs 6 et 7 sont engagés au milieu des disques 4 et 5 de façon à les traverser et à pouvoir être reliés si nécessaire à d'autres conducteurs du circuit électrique dans lequel le sectionneur est employé.

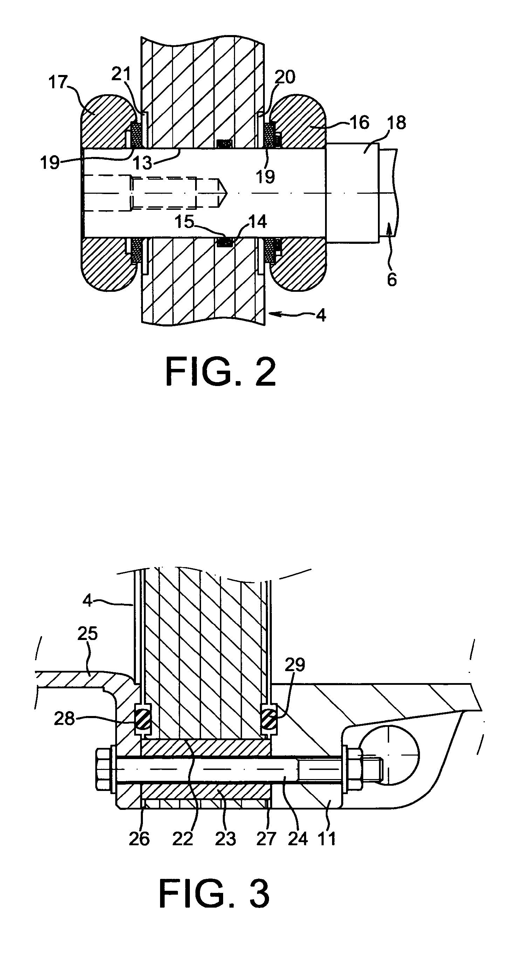

Ainsi que le montre la figure 2, le disque 4 est entaillé d'un perçage axial 13 occupé par un tronçon du conducteur 6. Une gorge 14 est établie à mi-épaisseur du disque 4 pour recevoir un joint d'étanchéité 15 torique pour empêcher les fuites de l'atmosphère particulière de l'enceinte 1. De part et d'autre du disque 4, des électrodes 16 et 17 sont enfilées autour du conducteur 6. Elles servent à empêcher des décharges partielles d'électricité quand le conducteur 6 est porté à un potentiel différent de l'enceinte 1, qui reste au potentiel de terre. La forme des électrodes, en particulier le rayon extérieur, est adaptée en conséquence. L'électrode 16 du côté interne de l'enceinte est placée contre un épaulement 18 autour du conducteur 6. L'effet des électrodes 16 et 17 peut être renforcé par des empilements de cales 19 de plus petit diamètre placées entre chacune des électrodes 16 et 17 et le disque 4 et qui servent à augmenter la distance entre le disque 4 et les électrodes 16, 17. Ces empilements de cales 19 sont collés ou libres. Ils sont construits dans la même matière que le disque 4. En variante, les décharges d'électricité pourraient aussi être rendues plus difficiles en établissant un relief sur le disque 4 autour du perçage radial 13 de manière à soutenir les électrodes 16 et 17 en les éloignant de la surface du reste du disque 4.

Dans la présente réalisation, le disque 4 est entaillé de rainures 20 et 21 sur ses deux faces, en rayonnant du perçage axial 13. Elles permettent de vider l'enceinte 1 de son contenu, par exemple de l'air et de la remplir du gaz de fonctionnement, sans emprisonner de l'air entre les cales.

On se reporte à la figure 3. Un inconvénient des matières envisagées pour le disque 4 ou 5 est leur grand coefficient de dilatation thermique, qui pourrait produire des déformations excessives aux températures élevées où le sectionneur travaille. On préconise donc un montage particulier des disques 4 et 5 sur les brides 11 et 12. Des perçages périphériques 22 de boulonnage des disques 4 et 5 reçoivent des tubes métalliques 23, d'aluminium par exemple, dont la longueur est un peu supérieure à l'épaisseur des disques 4 et 5, d'au moins 0,5 %, de manière qu'ils soient en saillie sur les deux faces des disques 4 et 5. Quand des boulons 24 sont serrés, ce sont les tubes 23 qui sont maintenus sur les brides 11 et 12, ainsi que sur les brides, telles que 25, d'autres éléments de l'appareillage électrique, comme des conduits ou d'autres portions d'enceinte, joints à l'enceinte 1. Des jeux 26 et 27 subsistent entre les disques 4 et 5 et les brides, qui sont disponibles pour recevoir les dilatations du disque 4. L'étanchéité aux gaz est maintenue par des joints 28 et 29 retenus dans des gorges établies dans les surfaces des disques 4 et 5 et des brides 11, 12 et 25.

Revenant à la figure 1, on voit que le disque 4 se distingue du disque 5 en ce qu'il est muni de perçages radiaux 30 destinés à loger des conducteurs 31 de mise à la terre. Les conducteurs 31 finissent en des boutons 32 sortant du disque 4 par la face interne en face de réceptacles 33 du commutateur, associés aux douilles 8, et qui viennent les coiffer à la position de mise à la terre des commutateurs. D'autres extrémités des conducteurs 31 finissent sur des barrettes 34 de connexion, installées à la périphérie de la bride 11 et qui assurent donc l'égalisation du potentiel du conducteur 6 et du potentiel de la terre dans la position de la figure 1. Comme variante, des instruments sont intercalés entre les conducteurs 31 et l'enceinte 1, par exemple pour mesurer le courant dans les contacts 33 ou pour détecter des décharges partielles.

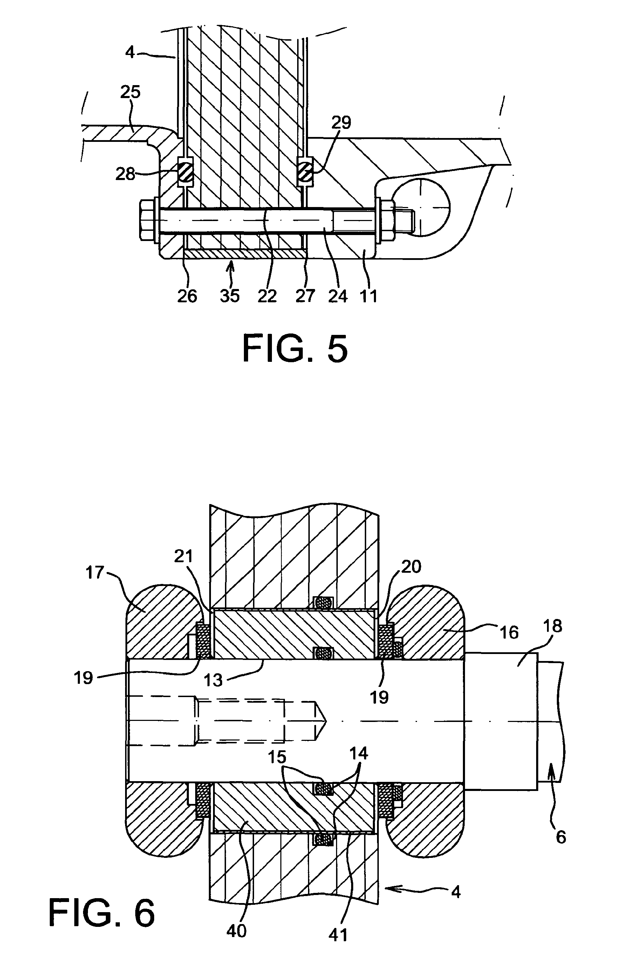

Le système aux tubes 23 métalliques pour autoriser la dilatation thermique des disques 4 et 5 pourrait être remplacé par un anneau métallique 35 entourant les disques. Cette solution est représentée à la figure 5. L'anneau métallique 35 a une largeur supérieure à l'épaisseur du disque d'au moins 0,5 % et saille sur ses deux côtés, comme les tubes métalliques 23.

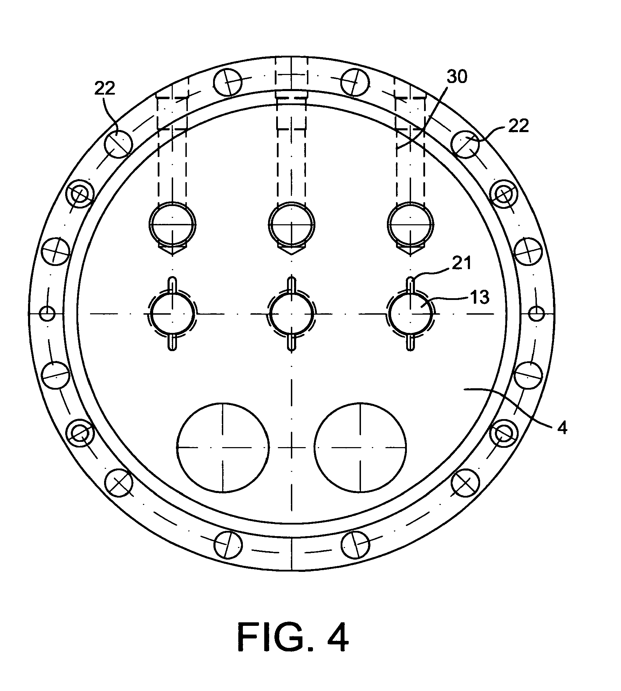

La figure 4 montre que les disques 4 et 5 peuvent soutenir plusieurs conducteurs 6 et 7, qui sont alors placés côte à côte. Les dispositifs de support des conducteurs comprenant les perçages axiaux 13 et les électrodes 16 et 17, en particulier, existent pour chacun des conducteurs, de même que les perçages radiaux 30 de mise à la terre.

Si les disques 4 et 5 n'ont pas la fonction d'étanchéité aux gaz et doivent seulement assurer l'isolation électrique des conducteurs, des joints d'étanchéité ne sont pas nécessaires. Il peut même arriver que les disques 4 et 5 soient placés entre deux enceintes à la même atmosphère. Il peut alors être préféré d'établir une communication entre ces volumes en perçant les disques 4 et 5.

Dans la variante de réalisation de la figure 6, un insert métallique 40 en forme de douille est engagé entre le conducteur 6 et le disque 4, au lieu de l'ajustement direct entre eux qu'on observerait dans la réalisation des figures 1 et 2. Il sert essentiellement à limiter l'échauffement du disque 4. L'insert métallique 40 est ajusté en force dans le disque 4 à leur surface de jonction 41. Le joint d'étanchéité 15 dans la gorge 14 est établi des deux côtés de l'insert métallique 40, contre le disque 4 et contre le conducteur 6.

L'insert métallique 40 pourrait être remplacé par un écran thermique de même forme et de mêmes dimensions, selon un dessin identique à la figure 6 ; l'ajustement en force serait remplacé par un collage à la surface de jonction 41.

L'application de ce nouveau matériau est aussi avantageuse si le disque isolant 5 n'a pas une forme plate. Le disque peut avoir une forme conique, comme dans de nombreux équipements existants, il peut être équipé de reliefs en forme d'ondes circulaires concentriques, mais il peut aussi être un disque d'épaisseur variable le long du rayon. De tels disques non plats peuvent être produits par formage à chaud.

## Revendications

1. Disque (4, 5) isolant de l'électricité pour de l'appareillage électrique à moyenne ou haute tension en matière thermoplastique ayant une constante diélectrique relative inférieure à 4,0, comprenant des régions affectées au support d'au moins un conducteur (6, 7) électrique et des régions affectées au support sur une pièce telle qu'une enceinte (1) à un autre potentiel électrique que le conducteur, **caractérisé en ce que** le disque est usiné dans un bloc de la matière thermoplastique, qui est un polyester de polyéthylène téréphtalate semi-cristallin avec un taux de cristallinité compris dans une plage de 25% à 50 %.

2. Disque isolant selon la revendication 1, **caractérisé en ce que** le polyéthylène téréphtalate est sans lubrification.

3. Disque isolant selon la revendication 1 ou 2, **caractérisé en ce que** le polyéthylène téréphtalate est renforcé par une charge minérale.

4. Disque isolant selon l'une quelconque des revendications 1 à 3, **caractérisé en ce qu'**il est essentiellement plat.

5. Disque isolant selon la revendication 4, **caractérisé en ce qu'**il a un rapport diamètre-sur-épaisseur inférieur à 10.

6. Disque isolant selon l'une quelconque des revendications 1 à 5, **caractérisé en ce qu'**il comprend des perçages périphériques (22) dans lesquels sont engagés des tubes métalliques (23) saillant du disque en ayant une longueur supérieure à une épaisseur du disque d'au moins 0,5 %.

7. Disque isolant selon l'une quelconque des revendications 1 à 5, **caractérisé en ce qu'**il est équipé d'un anneau métallique (35) entourant le disque et saillant du disque en ayant une largeur supérieure à une épaisseur du disque d'au moins 0,5 %.

8. Disque isolant selon la revendication 3, **caractérisé en ce que** la charge minérale est choisie parmi les matériaux suivants : silice, alumine, billes de verre, fibres de verre, mica, talc, nanocharges de type silicate.

9. Disque isolant selon l'une quelconque des revendications précédentes, **caractérisé en ce qu'**un écran thermique ou un insert métallique (40) est disposé entre le disque (4) et le conducteur (6).

10. Disque isolant selon l'une quelconque des revendications précédentes, **caractérisé en ce qu'**il est recouvert d'un vernis.

11. Disque isolant selon la revendication 10, **caractérisé en ce que** le vernis est un polyuréthane aliphatique.

12. Disque isolant selon l'une quelconque des revendications 1 à 5, **caractérisé en ce que** les régions affectées à l'appui du conducteur comprennent au moins un perçage axial (13).

13. Disque isolant selon l'une quelconque des revendications 1 à 5, **caractérisé en ce qu'**il comprend au moins un perçage radial (30) dans lequel est placé un conducteur (31) essentiellement au potentiel de la pièce (1).

14. Ensemble électrique pour de l'appareillage électrique à moyenne ou haute tension comprenant un disque isolant et un conducteur selon l'une quelconque des revendications précédentes, au moins un conducteur traversant le disque, **caractérisé en ce que** chaque conducteur comprend deux électrodes (16, 17) annulaires à la proximité du disque, et la forme des électrodes est optimisé afin d'éviter des décharges partielles.

15. Ensemble électrique selon la revendication 14, **caractérisé en ce qu'**il comprend des cales (19) interposées entre l'électrode et le disque et l'épaisseur des cales est optimisée afin d'éviter des décharges d'électricité.

16. Ensemble isolant selon l'une quelconque des revendications 14 ou 15, **caractérisé en ce qu'**il comprend un commutateur mobile à une position où il touche une portion (32), saillant du disque, du conducteur placé dans le perçage radial.

17. Ensemble isolant selon l'une quelconque des revendications 14 à 16, **caractérisé en ce que** le disque est disposé sur une ouverture de la pièce (1) et assemblé à la pièce avec des joints (28, 29) d'étanchéité aux gaz.

18. Sous-station étanche aux gaz comprenant un disque isolant de l'électricité selon l'une quelconque des revendications 1 à 13.

19. Sous-station étanche aux gaz comprenant un ensemble électrique selon l'une quelconque des revendications 14 à 17.

## Patentansprüche

1. Elektrisch isolierende Scheibe (4, 5) für elektrische Mittel- oder Hochspannungsgeräte aus thermoplastischem Material mit einer relativen Dielektrizitätskonstante von weniger als 4,0, umfassend Regionen, die zum Stützen wenigstens eines elektrischen Leiters (6, 7) bestimmt sind, sowie Regionen, die zum Stützen an einem Teil wie zum Beispiel einem Gehäuse (1) auf einem anderen elektrischen Potenzial als der Leiter bestimmt sind, **dadurch gekennzeichnet, dass** die Scheibe aus einem Block des thermoplastischen Materials hergestellt ist, das ein semikristallines Polyester von Polyethylen-terephthalat mit einer Kristallinitätsrate ist, welche in einem Bereich von 25 % bis 50 % enthalten ist.

2. Isolierende Scheibe nach Anspruch 1, **dadurch gekennzeichnet, dass** das Polyethylen-terephthalat schmierungsfrei ist.

3. Isolierende Scheibe nach Anspruch 1 oder 2, **dadurch gekennzeichnet, dass** das Polyethylen-terephthalat durch eine mineralische Beladung verstärkt ist.

4. Isolierende Scheibe nach einem der Ansprüche 1 bis 3, **dadurch gekennzeichnet, dass** sie im Wesentlichen flach ist.

5. Isolierende Scheibe nach Anspruch 4, **dadurch gekennzeichnet, dass** sie ein Verhältnis von Durchmesser zu Dicke kleiner als 10 hat.

6. Isolierende Scheibe einem der Ansprüche 1 bis 5, **dadurch gekennzeichnet, dass** sie Umfangsbohrungen (22) umfasst, in die Metallrohre (23) eingesetzt sind, welche von der Scheibe vorstehen, wobei sie eine Länge haben, die um wenigstens 0,5 % größer als eine Dicke der Scheibe ist.

7. Isolierende Scheibe nach einem der Ansprüche 1 bis 5, **dadurch gekennzeichnet, dass** sie mit einem Metallring (35) ausgestattet ist, der die Scheibe umgibt und von der Scheibe vorsteht, wobei er eine Breite hat, die um wenigstens 0,5 % größer als eine Dicke der Scheibe ist.

8. Isolierende Scheibe nach Anspruch 3, **dadurch gekennzeichnet, dass** die mineralische Beladung ausgewählt ist aus den folgenden Materialien: Siliciumdioxid, Aluminiumoxid, Glaskugeln, Glasfasern, Glimmer, Talk, Nanobeladungen vom Typ Silikat.

9. Isolierende Scheibe nach einem der vorhergehenden Ansprüche, **dadurch gekennzeichnet, dass** ein thermischer Schirm oder ein Metalleinsatz (40) zwischen der Scheibe (4) und dem Leiter (6) angeordnet ist.

10. Isolierende Scheibe nach einem der vorherigen Ansprüche, **dadurch gekennzeichnet, dass** sie mit einem Lack bedeckt ist.

11. Isolierende Scheibe nach Anspruch 10, **dadurch gekennzeichnet, dass** der Lack ein aliphatisches Polyurethan ist.

12. Isolierende Scheibe nach einem der Ansprüche 1 bis 5, **dadurch gekennzeichnet, dass** die Regionen, die zur Anlage des Leiters bestimmt sind, wenigstens eine axiale Bohrung (13) umfassen.

13. Isolierende Scheibe nach einem der Ansprüche 1 bis 5, **dadurch gekennzeichnet, dass** sie wenigstens eine radiale Bohrung (30) umfasst, in der ein Leiter (31) im Wesentlichen auf dem Potenzial des Teils (1) platziert ist.

14. Elektrische Anordnung für elektrische Mittel- oder Hochspannungsgeräte, umfassend eine isolierende Scheibe und einen Leiter nach einem der vorhergehenden Ansprüche, wobei wenigstens ein Leiter die Scheibe durchsetzt, **dadurch gekennzeichnet, dass** jeder Leiter zwei ringförmige Elektroden (16, 17) in der Nähe der Scheibe umfasst, und die Form der Elektroden zur Vermeidung partieller Entladungen optimiert ist.

15. Elektrische Anordnung nach Anspruch 14, **dadurch gekennzeichnet, dass** sie Blöcke (19) umfasst, die zwischen der Elektrode und der Scheibe eingefügt sind, und dass die Dicke der Blöcke zur Vermeidung elektrischer Entladungen optimiert ist.

16. Isolierende Anordnung nach einem der Ansprüche 14 oder 15, **dadurch gekennzeichnet, dass** sie einen Schalter umfasst, der in eine Position bewegbar ist, wo er einen von der Scheibe vorstehenden Bereich (32) des Leiters berührt, der in der radialen Bohrung platziert ist.

17. Isolierende Anordnung nach einem der Ansprüche 14 bis 16, **dadurch gekennzeichnet, dass** die Scheibe auf einer Öffnung des Teils (1) angeordnet und mit dem Teil mittels gasdichter Verbindungen (28, 29) zusammengefügt ist.

18. Gasdichte Unterstation, umfassend eine elektrisch isolierende Scheibe nach einem der Ansprüche 1 bis 13.

19. Gasdichte Unterstation, umfassend eine elektrische Anordnung nach einem der Ansprüche 14 bis 17.

## Claims

1. Electricity insulating disc (4, 5) for medium or high voltage electrical equipment made from thermoplastic material having a relative dielectric constant of less than 4.0, comprising regions assigned to the support of at least one electrical conductor (6, 7) and regions assigned to the support on a part such as an enclosure (1) at a potential different from the potential of the conductor, **characterised in that** the thermoplastic material is machined from a block of the thermoplastic material, which is a semicrystalline terephtalate polyethylene polyester having a crystallinity ratio comprised between 25% and 50%.

2. Insulating disc according to claim 1, **characterised in that** the terephtalate polyethylene is without lubricant.

3. Insulating disc according to claim 1, **characterised in that** the terephthalate polyethylene is reinforced by a mineral filler.

4. Insulating disc according to any one of claims 1 to 3, **characterised in that** it is essentially flat.

5. Insulating disc according to claim 4, **characterised in that** it has a diameter - thickness ratio less than 10.

6. Insulating disc according to any one of claims 1 to 5, **characterised in that** it includes peripheral drillings (22) in which metal tubes (23) projecting from the disc are force fitted with a length greater than the thickness of the disc by at least 0.5%.

7. Insulating disc according to any one of claims 1 to 5, **characterised in that** it is fitted with a metal ring (35) surrounding the disc and projecting from it with a width greater than the thickness of the disc by at least 0.5%.

8. Insulating disc according to claim 3, **characterised in that** the mineral filler is chosen from among the following materials: silica, alumina, glass balls, glass fibres, mica, talc, silicate type nanofillers.

9. Insulating disc according to any one of the previous claims, **characterised in that** a heat shield or a metal insert (40) is inserted between the disc (4) and the conductor (6).

10. Insulating disc according to any one of the previous claims, **characterised in that** a varnish is applied on it.

11. Insulating disc according to claim 10, **characterised in that** the varnish is an aliphatic polyurethane.

12. Insulating disc according to any one of claims 1 to 5, **characterised in that** regions assigned to supporting the conductor comprise at least one axial drilling (13).

13. Insulating disc according to any one of claims 1 to 5, **characterised in that** it comprises at least one radial drilling (30) in which a conductor (31) is placed essentially at the same potential as the part (1).

14. Electrical assembly for a medium or high voltage electrical equipment comprising an insulating disc and a conductor according to any one of the previous claims, at least one conductor passing through the disc, **characterised in that** each conductor comprises two ring electrodes (16, 17) close to the disc, and the shape of the electrodes is optimised to eliminate partial discharges.

15. Electrical assembly according to claim 14, **characterised in that** it comprises shims (19) inserted between the electrode and the disc, and the thickness of the shims is optimised in order to eliminate electrical discharges.

16. Insulating assembly according to either claim 14 or 15, **characterised in that** it comprises a mobile switch located at a position where it comes into contact with a portion (32) of the conductor located in the radial drilling, this portion projecting from the disc.

17. Insulating assembly according to any one of claims 14 to 16, **characterised in that** the disc is placed on the opening of the part (1) and is fixed to the part using gas-tight seals (28, 29).

18. Gas-tight substation comprising an electricity insulating disc according to any one of claims 1 to 13.

19. Gas-tight substation comprising an electrical assembly according to any one of claims 14 to 17.
